# EUROPÄISCHE PATENTSCHRIFT

(11) **EP 1 697 949 B1**
(45) Veröffentlichungstag und Bekanntmachung des Hinweises auf die Patenterteilung: **11.07.2007**
(21) Anmeldenummer: 04765864.6
(22) Anmeldetag: 07.10.2004
(51) Int. Cl.: H01F 7/18

(54) **ELEKTRISCHE SCHALTUNGSANORDNUNG FÜR DIE ANSTEUERUNG EINES MAGNETBETÄTIGTEN FLUIDIK-VENTILS**
ELECTRIC CIRCUIT ARRANGEMENT FOR CONTROLLING A SOLENOID-OPERATED FLUID VALVE
MONTAGE ELECTRIQUE POUR COMMANDER UNE SOUPAPE FLUIDIQUE A ACTIONNEMENT MAGNETIQUE

(30) Priorität: 19.12.2003 DE 10360621
(43) Veröffentlichungstag der Anmeldung: 06.09.2006
(73) Patentinhaber: Bosch Rexroth AG, 70184 Stuttgart (DE)
(72) Erfinder: PANZER, Karlheinz, 97525 Schwebheim (DE); KNÜTTEL, Richard, 97794 Rieneck (DE); MEISSELBACH, Alexander, 97794 Rieneck (DE)
(86) Internationale Anmeldenummer: PCT/EP2004/011191
(87) Internationale Veröffentlichungsnummer: WO 2005/064622

(56) Entgegenhaltungen:
- DE-A- 2 426 512
- DE-A- 19 515 640
- DE-C- 10 057 375
- GB-A- 2 335 797
- MANNESMANN REXROTH: "Elektrisches Verstärker-Modul zur Ansteuerung von direktgesteuerten Regelventilen mit elektrischer Rückführung Typ VT 11080, Serie 2X" DATENBLATT RD29 757 04.93, April 1993 (1993-04), Seiten 1-4, XP002313352 LOHR AM MAIN, DE in der Anmeldung erwähnt
- PATENT ABSTRACTS OF JAPAN Bd. 016, Nr. 059 (E-1166), 14. Februar 1992 (1992-02-14) & JP 03 256515 A (KUBOTA CORP), 15. November 1991 (1991-11-15)
- PATENT ABSTRACTS OF JAPAN Bd. 1996, Nr. 10, 31. Oktober 1996 (1996-10-31) & JP 08 162325 A (NOK CORP), 21. Juni 1996 (1996-06-21)
- PATENT ABSTRACTS OF JAPAN Bd. 009, Nr. 223 (M-411), 10. September 1985 (1985-09-10) & JP 60 081582 A (HANSHIN ELECTRIC KK), 9. Mai 1985 (1985-05-09)
- PATENT ABSTRACTS OF JAPAN Bd. 016, Nr. 057 (M-1210), 13. Februar 1992 (1992-02-13) & JP 03 255284 A (KUBOTA CORP), 14. November 1991 (1991-11-14)

## Beschreibung

Die Erfindung betrifft eine elektrische Schaltungsanordnung für die Ansteuerung eines magnetbetätigten Fluidik-Ventils gemäß dem Oberbegriff des Anspruchs 1.

Eine derartige Schaltungsanordnung ist aus der Druckschrift "Elektrisches Verstärker-Modul zur Ansteuerung von direktgesteuerten Regelventilen mit elektrischer Rückführung Typ VT 11080, Serie 2X" (RD 29 757/04.93) der Mannesmann Rexroth GmbH bekannt. Die Schaltungsanordnung weist eine Verstärkerschaltung mit einer Eingangsstufe und einer Endstufe auf. Der Eingangsstufe ist ein elektrisches Eingangssignal, z. B. in Form einer in einem Bereich zwischen 0 und 10 V veränderlichen Gleichspannung, zugeführt. Bei dieser Spannung handelt es sich im einfachsten Fall um eine an einem Potentiometer abgegriffene Spannung. Alternativ hierzu kann es sich um eine von einer üblicherweise als "SPS" bezeichneten speicherprogrammierbaren Steuerung abgegebene Spannung handeln oder um eine von einer anderen übergeordneten Steuerung abgegebene Spannung. Die der Eingangsstufe zugeführte Spannung dient als Sollwert für den Strom, der der Magnetspule zugeführt werden soll. In der Eingangsstufe erfolgt bei Bedarf eine Verknüpfung mit weiteren Signalen zu einem Steuersignal für die Endstufe. Die Endstufe formt das Steuersignal in einen Strom um. Dieser Strom ist der Magnetspule. über Verbindungsleitungen zugeführt, die zwischen der Endstufe und der Magnetspule angeordnet sind. Dabei entspricht z. B. ein Bereich des Stroms zwischen 0 und 1 A einem Bereich der Eingangsspannung von 0 bis 10 V.

Um die Sicherheitsanforderungen der ATEX-Vorschriften zu erfüllen, ist es u. a. erforderlich, dafür zu sorgen, daß die Oberflächentemperatur der einzelnen Komponenten einer Anlage stets kleiner als die Zündtemperatur des die Komponenten umgebenden Gases ist. Im Fall von elektrisch angesteuerten. Fluidik-Ventilen mit einem von einer Magnetspule betätigten Steuerelement ist die Magnetspule ein Bauteil, das sich während des Betriebs stromabhängig erwärmt. Erschwerend wirkt sich dabei aus, daß die Grenzwerte für den über die Magnetspule fließenden Strom in vielen Fällen nur knapp oberhalb des für die volle Auslenkung des Steuerelements des Fluidik-Ventils erforderlichen Wertes liegen. Das bedeutet, daß der Sicherheitsabstand zwischen dem für die volle Auslenkung des Steuerelements des Fluidik-Ventils erforderlichen Strom und dem durch den Aufbau der Magnetspule vorgegebenen Grenzwert des Stroms in der Größenordnung von nur wenigen Prozent, z. B. 5 %, des größten betriebsmäßig vorgesehenen Stroms liegt. Im normalen Betrieb wird dieser Grenzwert nicht erreicht, jedoch sind eine Reihe von Fällen denkbar, in denen der Grenzwert des über die Magnetspule fließenden Stroms erreicht und auch überschritten wird. Hierzu gehören z. B. eine Übersteuerung des Verstärkereingangs, bei der die der Eingangsstufe des Verstärkers zugeführte Eingangsspannung größer ist als die dem größten betriebsmäßig vorgesehenen Strom zugeordnete Eingangsspannung. Ein anderer Fall, in dem es zu einem den Grenzwert überschreitenden Strom kommen kann, ist eine kundenseitige Fehlbedienung der Parametereinstellung des Verstärkers, die zu einem gegenüber dem größten betriebsmäßig vorgesehenen Strom erhöhten Ausgangsstrom führt. Ein weiterer denkbarer Fall, in dem es zu einem den Grenzwert überschreitenden Strom kommt, kann bei einem Kurzschluß zwischen einer Betriebsspannung führenden Leitung und einer von dem Verstärker zu der Magnetspule führenden Verbindungsleitung auftreten. Maßnahmen, die in derartigen Fällen eine unzulässig große Erwärmung der Magnetspule verhindern, sind in der Druckschrift RD 29 757/04.93 nicht angegeben.

Aus der DE 195 15 640 A1 ist eine Schaltungsanordnung für die elektrische Ansteuerung eines magnetbetätigten Fluidik-Ventils bekannt. In den Verbindungsleitungen zwischen einem Verstärker und einer Magnetspule ist ein gesteuerter Schalter in Form eines Kontaktes eines Hilfsschützes angeordnet. Dieser gesteuerte Schalter dient dazu, erhöhte sicherheitstechnische Anforderungen zu erfüllen, wie sie z. B. beim Einsatz von elektrisch betätigten hydraulischen Ventilen zur Steuerung des Flusses des Druckmediums zu Zylindern, die Werkzeuge einer Presse verfahren, einzuhalten sind. In einem gefährlichen Betriebszustand soll die Maschine sicher stillgesetzt werden können. Dies soll z. B. dann geschehen, wenn beim Erreichen des oberen Totpunktes der Presse ein Endschalter anspricht, wenn ein Notausschalter betätigt worden ist oder wenn eine übergeordnete Steuerung ein entsprechendes Signal ausgibt. In diesen Fällen wird ein Freigabesignal weggenommen, das zusätzlich zu anderen Funktionen, die es ausübt, auch den gesteuerten Schalter öffnet. Ist das Ventil als Proportionalventil mit positiver Überdeckung und mechanischer Zentrierung des Steuerkolbens ausgeführt, nimmt dieser bei fehlender Bestromung der Magnetspule eine sichere Mittelstellung ein, in der kein Druckmedium zu oder von dem Zylinder fließt. Mit der Öffnung des gesteuerten Schalters ist somit sichergestellt, daß auch im Fall einer elektrischen Störung des Verstärkers, kein Strom über die Magnetspule fließt. Maßnahmen, die eine unzulässig große Erwärmung der Magnetspule verhindern, sind in der aus der DE 195.15 640 A1 bekannten Schaltungsanordnung nicht angesprochen.

Aus der DE-OS 24 26 512 ist eine Einrichtung zum Schalten eines elektrohydraulischen magnetbetätigten Wegeventils bekannt. Ein im Normalbetrieb als Schalttransistor arbeitender Transistor verbindet entsprechend einem getakteten Steuerstrom, der seinem Basisanschluß zugeführt ist, in dem einen Schaltzustand eine Magnetspule mit einer Versorgungsspannung und unterbricht in dem anderen Schaltzustand diese Verbindung. Die Größe des über die Magnetspule fließenden Stroms ist durch den ohmschen Widerstand der Magnetspule und die Höhe der Versorgungsspannung bestimmt. Zum Schutz des Schalttransistors ist eine Schutzschaltung vorgesehen, die immer dann, wenn ein höherer Strom als der betriebsmäßige Strom fließt, einen zwischen der Versorgungsspannungsquelle und der Magnetspule angeordneten Kontakt eines Relais öffnet. Bei einem Strom, der nur geringfügig größer ist als der betriebsmäßige Strom, öffnet das Relais den Kontakt zwischen der Versorgungsspannungsquelle und der Magnetspule. Danach bleibt der Stromfluß aufgrund einer Selbsthaltung des Relais unterbrochen. Bei einem Strom, der wesentlich größer als der betriebsmäßige Strom ist, wird in dem Zeitraum bis zum Ansprechen des Relais zusätzlich der Steuerstrom des Schalttransistors verringert. Diese Schaltungsanordnung betrifft eine Endstufe, die eine Magnetspule mit einer getakteten Spannung beaufschlagt. Es ist keine Eingangsstufe vorgesehen, die eine variable Eingangsspannung über eine Stromsteuerung oder Stromregelung in einen der Größe der Eingangsspannung entsprechenden Strom umformt, wie z. B. bei der aus der eingangs genannten Druckschrift RD 29 757/04.93 bekannten Schaltungsanordnung. Auch das Problem einer Begrenzung der Oberflächentemperatur der Magnetspule ist nicht angesprochen.

Der Erfindung liegt die Aufgabe zugrunde, eine Schaltungsanordnung der eingangs genannten Art zu schaffen, die es erlaubt, die Oberflächentemperatur einer Magnetspule mit erhöhter Sicherheit zu begrenzen, insbesondere durch Beeinflussung des über die Magnetspule fließenden Stroms, auch dann wenn zwischen dem größten betriebsmäßig erforderlichen Strom und dem der maximalen Oberflächentemperatur der Magnetspule entsprechenden Grenzwert des Stroms nur ein kleiner Abstand besteht.

Diese Aufgabe wird durch die im Anspruch 1 gekennzeichneten Merkmale gelöst. Die Überwachungsschaltung bildet einen den Strom begrenzenden Regelkreis, der nur dann eingreift, wenn der Strom den oberen Schwellenwert überschreitet. In diesem Fall verringert die Überwachungsschaltung die der Eingangsstufe der Verstärkerschaltung zugeführte Eingangsspannung. Sinkt der Strom trotzdem nicht wieder unter den oberen Schwellenwert, unterbricht die Überwachungsschaltung eine von der Endstufe der Verstärkerschaltung zu der Magnetspule führende Verbindungsleitung. Durch die bei einer Überschreitung des oberen Schwellenwerts des Stroms zunächst erfolgende Verringerung der der Eingangsstufe der Verstärkerschaltung zugeführten Eingangsspannung läßt sich der Strom auf Werte unterhalb des oberen Schwellenwerts verringern, ohne gleich die zu der Magnetspule führenden Verbindungsleitungen unterbrechen zu müssen. Dies ist insbesondere bei nur kurzzeitig auftretenden geringfügigen Überschreitungen des oberen Schwellenwerts des Stroms von Vorteil, da in solchen Fällen - anders als bei einer selbsthaltenden Unterbrechung der Verbindungsleitungen - keine Betriebsunterbrechung erfolgt, die eine Wiedereinschaltung durch das Betriebspersonal erforderlich macht. Eine selbsthaltende Unterbrechung der Verbindungsleitungen erfolgt erst dann, wenn eine Störung so gravierend ist, daß sich der über die Magnetspule fließende Strom nicht durch eine Verringerung der der Eingangsstufe der Verstärkeranordnung zugeführten Eingangsspannung unter den oberen Schwellenwert verringern läßt. Die erfindungsgemäßen Maßnahmen erhöhen somit die Verfügbarkeit von Maschinen mit Fluidik-Ventilen, die sich in explosionsgefährdeten Bereichen befinden.

Vorteilhafte Weiterbildungen der Erfindung sind in den Unteransprüchen gekennzeichnet. Im Anspruch 2 ist eine bevorzugte Ausgestaltung der Verringerung der der Eingangsstufe der Verstärkerschaltung zugeführten Spannung angegeben. Alternativ hierzu ist es auch möglich, zur Verringerung der Eingangsspannung eine Korrekturspannung von der Sollwertspannung abzuziehen oder die Sollwertspannung mit einem Korrekturfaktor zu multiplizieren. Gemäß Anspruch 3 wird die Ausgangsspannung des Integrationsglieds nach oben auf einen Wert begrenzt, der geringfügig größer als die maximale Sollwertspannung ist. Damit ist sichergestellt, daß der Eingangsstufe der Verstärkerschaltung im ungestörten Betrieb die Sollwertspannung zugeführt ist. Außerdem ist dafür gesorgt, daß dann wenn der zeitliche Mittelwert des über die Verbindungsleitungen flie-ßenden Stroms den oberen Schwellenwert überschreitet, die Verringerung der der Eingangsstufe der Verstärkerschaltung zugeführten Spannung möglichst bald erfolgt. Das dem Komparator gemäß Anspruch 4 vorgeschaltete Verzögerungsglied verhindert, daß die Überwachungsschaltung bereits bei nur kurzzeitigen Überschreitungen des oberen Schwellenwerts für den Strom eingreift. Der im Anspruch 5 angegebene Betragsbildner erlaubt eine Stromüberwachung unabhängig von der Richtung, in der der Strom über die Magnetspule fließt. Die Ansprüche 6 bis 8 betreffen verschiedene vorteilhafte Ausgestaltungen des den Stromfluß im Fall einer Störung unterbrechenden Teils der Überwachungsschaltung. Dabei ist die Zeit, nach der die Überwachungsschaltung eine Verbindungsleitung unterbricht, nachdem der Strom den oberen Schwellenwert überschritten hat, durch die dem unteren Schwellenwert entsprechende Spannung und die Zeitkonstante des Integrationsglieds bestimmt. Im Anspruch 9 ist eine vorteilhafte Ausgestaltung des zweiten Komparators und des diesem nachgeschalteten bistabilen Schalters angegeben. Die Ansprüche 10 und 11 beinhalten eine Vereinfachung der Überwachungsschaltung bei einer Verstärkerschaltung, die eine von zwei Magnetspulen in Abhängigkeit von dem Vorzeichen der Sollwertspannung ansteuert. Hierbei wird ausgenutzt, daß im ordnungsgemäßen Betrieb höchstens eine der beiden Magnetspulen bestromt ist und daß im Fehlerfall eine Unterbrechung auch der zu der anderen Magnetspule führenden Leitungen in der Regel nicht nachteilig ist.

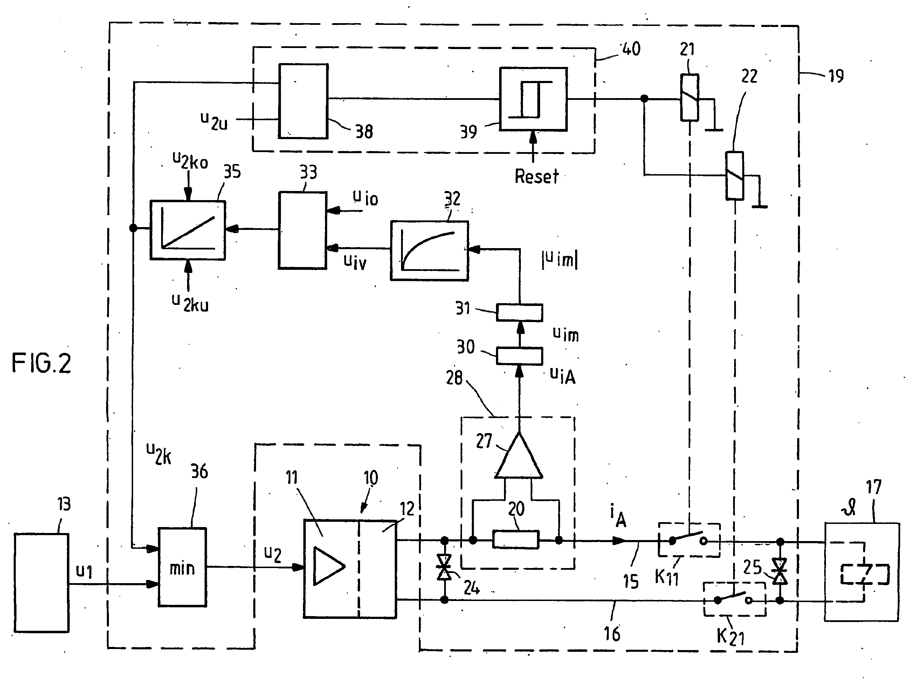

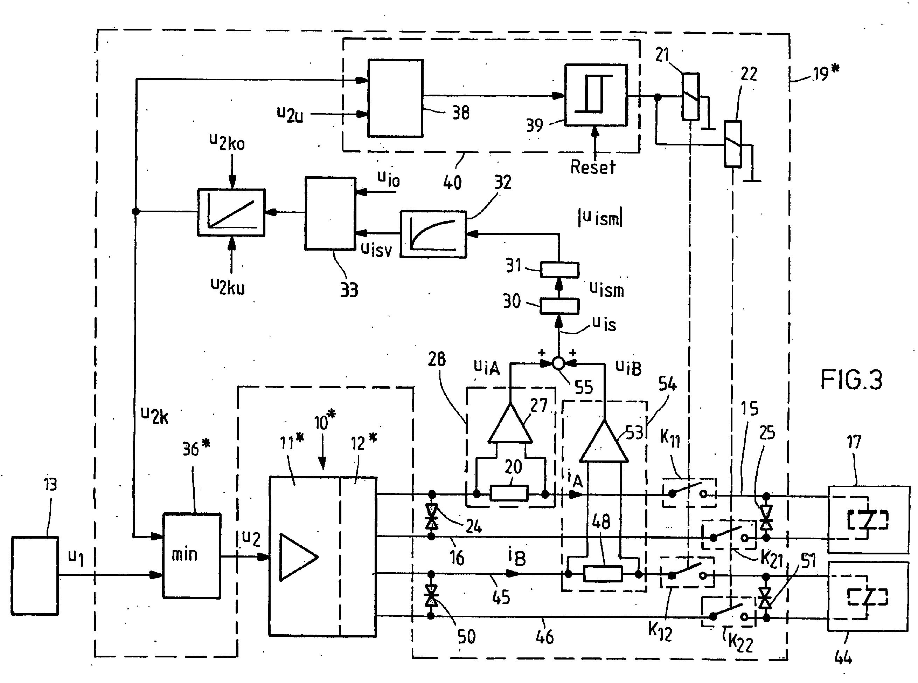

Die Erfindung wird im folgenden mit ihren weiteren Einzelheiten anhand von in den Figuren 2 und 3 dargestellten Ausführungsbeispielen näher erläutert. Es zeigen
- Figur 1: ein Blockschaltbild einer Schaltungsanordnung nach dem Stand der Technik,
- Figur 2: ein Blockschaltbild einer ersten erfindungsgemäß ausgebildeten Schaltungsanordnung und
- Figur 3: ein Blockschaltbild einer zweiten erfindungsgemäß ausgebildeten Schaltungsanordnung.

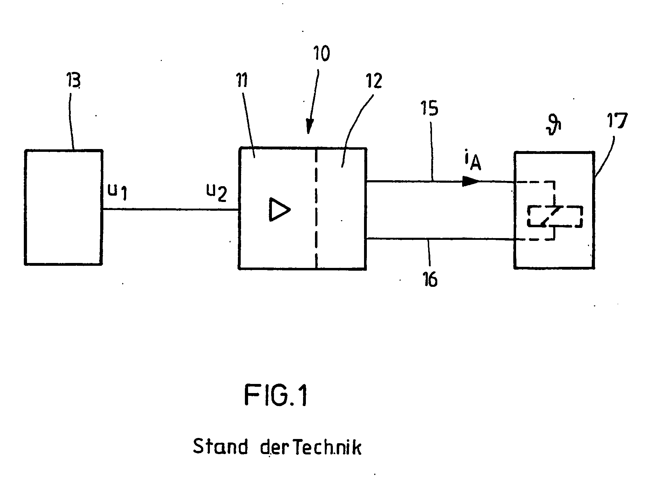

Die Figur 1 zeigt ein vereinfachtes Blockschaltbild einer bekannten elektrischen Schaltungsanordnung für die Ansteuerung eines magnetbetätigten Fluidik-Ventils, insbesondere eines Ventils für hydraulisches Druckmedium. Eine Verstärkerschaltung 10 mit einer Eingangsstufe 11 und einer Endstufe 12 formt eine Eingangsspannung u₂ in einen Strom i_{A} um. Bei der Eingangsspannung u₂ handelt es sich um die Ausgangsspannung u₁ eines Sollwertgebers 13, z. B. eine an einem Potentiometer abgegriffene Spannung. Die Ausgangsspannung u₁ ist innerhalb eines Bereichs, z. B. zwischen 0 V und +10 V (entsprechend 0 % bis 100 % des Sollwerts), einstellbar. Liefert der Sollwertgeber 13 dagegen als Ausgangsgröße einen Strom, ist zwischen dem Sollwertgeber 13 und der Eingangsstufe 11 ein hier nicht dargestellter Signalumformer angeordnet, der den Ausgangsstrom des Sollwertgebers 13 in eine Spannung entsprechender Größe umformt. Der von der Endstufe 12 gelieferte Strom i_{A} ist über Verbindungsleitungen 15 und 16 einer Magnetspule 17 zugeführt. Die Endstufe 12 der Verstärkerschaltung 10 führt der Magnetspule 17 üblicherweise einen pulsweitenmodulierten Strom zu.

Der Stromfluß in der Magnetspule 17 erzeugt einerseits eine Magnetkraft, andererseits bewirkt er auch eine Erwärmung der Magnetspule 17. Für den Explosionsschutz ist dabei die Erwärmung der Oberfläche der Magnetspule 17 von besonderer Bedeutung. Die im Folgenden mit dem Buchstaben ϑ bezeichnete Oberflächentemperatur der Magnetspule 17 muß stets kleiner sein als die Zündtemperatur des die Magnetspule umgebenden Gases. Diese Anforderung für den Explosionsschutz ist erfüllt, wenn der über die Magnetspule 17 fließende Strom i_{A} kleiner ist als ein Grenzwert, bei dem sich eine noch zulässige Oberflächentemperatur ϑ_{zul} einstellt. Problematisch ist jedoch, daß der dieser Temperatur entsprechende Strom in der Praxis nur,geringfügig größer ist als der einem Sollwert von 100 % entsprechende Strom. Das bedeutet, daß bereits bei einer geringen Überschreitung des einem Sollwert von 100 % entsprechenden Stroms ein nicht zulässiger Zustand erreicht wird. Die im Folgenden anhand der Figuren 2 und 3 beschriebenen Schaltungsanordnungen gemäß der Erfindung erlauben trotzdem einen sicheren Betrieb der Magnetspule in explosionsgefährdeter Umgebung. Dabei ist die Schaltungsanordnung erfindungsgemäß so ausgebildet, daß zunächst der Strom auf einen ungefährlichen Wert begrenzt wird und erst dann, wenn im Falle eines kritischen Fehlers diese Maßnahme nicht ausreichend ist, das Ventil durch eine Unterbrechung des Stromflusses zu der Magnetspule außer Betrieb gesetzt wird.

Die Figur 2 zeigt eine erste erfindungsgemäß ausgebildete Schaltungsanordnung für die Ansteuerung eines magnetbetätigten Fluidik-Ventils in explosionsgefährdeter Umgebung. Ein wesentlicher Bestandteil dieser Schaltungsanordnung ist eine Überwachungsschaltung 19, die der Eingangsstufe 11 der Verstärkerschaltung 10 vorgeschaltet und ihrer Endstufe 12 nachgeschaltet ist. Daß die Überwachungsschaltung 19 nicht in die Verstärkerschaltung 10 integriert ist, hat den Vorteil, daß beliebige Ventilverstärkerschaltungen eingesetzt werden können. Insbesondere können solche Verstärkerschaltungen eingesetzt werden, die sich in der Vergangenheit bereits bewährt haben. Dabei ist besonders vorteilhaft, daß diese Verstärkerschaltungen keine eigene Ex-Schutz-Zulassung benötigen. In der Verbindungsleitung 15 ist die Reihenschaltung eines Meßwiderstands 20 und eines Kontakts K₁₁ eines ersten Relais 21 angeordnet. In der Verbindungsleitung 16 befindet sich ein Kontakt K₂₁ eines zweiten Relais 22. Bei den Kontakten K₁₁ und K₂₁ handelt es sich um "Schließkontakte", die nur bei Erregung des zugehörigen Relais geschlossen sind. Das bedeutet, daß sich die Kontakte K₁₁ und K₂₁ bei einem Ausfall der Versorgungsspannung öffnen, und daß sich die Schaltungsanordnung dann in einem sicheren Zustand befindet. Parallel zu dem Ausgang der Endstufe 12 und zu der Magnetspule 17 sind bipolare Z-Dioden 24 bzw. 25 angeordnet, die jeweils die Spannung zwischen den Verbindungsleitungen 15 und 16 begrenzen. Die bipolaren Z-Dioden 24 und 25 sind Bestandteile der Überwachungsschaltung 19.

Die an dem Meßwiderstand 20 abfallende Spannung ist einem Differenzverstärker 27 zugeführt. Der Differenzverstärker 27 formt die an dem Meßwiderstand 20 abfallende Spannung in eine auf ein Bezugspotential bezogene Spannung u_{iA} um. Der Meßwiderstand 20 und der Differenzverstärker 27 bilden eine Strommeßeinrichtung 28. Ein Mittelwertbildner 30 bildet den zeitlichen Mittelwert uᵢₘ der Spannung u_{iA}. Diese Spannung entspricht in ausreichender Näherung dem für die Erwärmung der Magnetspule 17 maßgebenden Strom. Ein Betragsbildner 31 bildet den Betrag |uᵢₘ| der Spannung uᵢₘ. Damit spielt es keine Rolle, ob der Strom i_{A} in der in der Figur 2 dargestellten Pfeilrichtung oder in der entgegengesetzten Richtung fließt. Von der Überwachungsschaltung 19 wird somit nur die Höhe des Stroms i_{A} ausgewertet. Die Reihenfolge des Mittelwertbildners 30 und des Betragsbildners 31 kann auch vertauscht werden, so daß zuerst die Betragsbildung und danach die Mittelwertbildung erfolgt. Der Betrag |uᵢₘ| der Spannung uᵢₘ ist einem Verzögerungsglied 32 zugeführt, dessen Ausgangsspannung mit uᵢᵥ bezeichnet ist. Die Spannung uᵢᵥ und eine Spannung uᵢₒ, die einem oberen Schwellenwert des über die Verbindungsleitungen 15 und 16 fließenden Stroms i_{A} entspricht, sind einem ersten Komparator 33 zugeführt. Dem Komparator 33 ist ein Integrationsglied 35 nachgeschaltet. Die Ausgangsspannung des Integrationsglieds 35 ist mit u₂ₖ bezeichnet. Ist im normalen Betrieb die Spannung uᵢᵥ kleiner als der obere Schwellenwert uᵢₒ, steuert der Komparator 33 das Integrationsglied 35 so an, daß seine Ausgangsspannung u₂ₖ ansteigt, bis sie einen oberen Wert u₂ₖₒ erreicht, der die Spannung u₂ₖ nach oben begrenzt. Der obere Wert u₂ₖₒ ist so gewählt, daß er geringfügig größer als die einem Sollwert von 100 % entsprechende Sollwertspannung u_{1[100%]} ist. Wichtig ist, daß der Wert u₂ₖₒ nicht kleiner als die Sollwertspannung u_{1[100%]} gewählt ist. Ist bei zu großen Werten des Stroms i_{A} die Spannung uᵢᵥ größer als der obere Schwellenwert uᵢₒ, steuert der Komparator 33 das Integrationsglied 35 so an, daß sich seine Ausgangsspannung u₂ₖ verringert, bis sie einen unteren Wert u₂ₖᵤ erreicht, der die Spannung u₂ₖ nach unten begrenzt. Der untere Wert u₂ₖᵤ ist so gewählt, daß er kleiner als ein unterer Schwellenwert u₂ᵤ ist. Im normalen Betrieb ist die hier als Korrekturspannung dienende Spannung u₂ₖ gleich dem oberen Wert u₂ₖₒ. Die Überwachungsschaltung 19 enthält ein Minimalwertauswahlglied 36, dessen Eingängen die Sollwertspannung u₁ und die Korrekturspannung u₂ₖ zugeführt sind. Das Minimalwertauswahlglied 36 ist der Eingangsstufe 11 der Verstärkerschaltung 10 vorgeschaltet und führt der Eingangsstufe 11 die jeweils kleinere der Spannungen u₁ bzw. u₂ₖ als Eingangsspannung u₂ zu. Weist die Eingangsstufe 11 anstelle des Spannungseingangs einen Stromeingang auf, erfolgt eine hier nicht dargestellte Umformung der Spannung u₂ in einen Eingangsstrom, den die Verstärkerschaltung 10 in den der Magnetspule 17 zugeführten Strom i_{A} umformt. Überschreitet der Strom i_{A} den im Hinblick auf die Erwärmung der Magnetspule 17 maximal zulässigen Wert, erhöht sich die Spannung |uᵢₘ| in entsprechender Weise. Ist die gegenüber der Spannung |uᵢₘ| verzögerte Spannung uᵢᵥ größer als die Spannung uᵢₒ geworden, verringert sich die Korrekturspannung u₂ₖ ausgehend von der Spannung u₂ₖₒ. Das Minimalwertauswahlglied 36 führt der Eingangsstufe 11 solange die Sollwertspannung u₁ zu, bis die Korrekturspannung u₂ₖ kleiner als u₁ geworden ist. Danach führt das Minimalwertauswahlglied 36 der Eingangsstufe 11 die Korrekturspannung u₂ₖ zu, die jetzt kleiner als die vorher wirksame Sollwertspannung u₁ ist. Die Verringerung der der Eingangsstufe 11 zugeführten Spannung u₂ führt, z. B. bei einer nur leichten Übersteuerung der Verstärkerschaltung 10, zu einer Verringerung des Stroms i_{A}. In entsprechender Weise verringert sich auch die dem Komparator 33 zugeführte Spannung uᵢᵥ, bis sie wieder die dem oberen Schwellenwert entsprechende Spannung uᵢₒ unterschreitet. Von diesem Zeitpunkt an erhöht sich die Spannung u₂ₖ wieder. Der Komparator 33 wirkt hierbei als Zweipunktregler eines den Mittelwert des Stroms i_{A} begrenzenden Regelkreises.

Zusätzlich ist die Korrekturspannung u₂ₖ zusammen mit einer einem unteren Schwellenwert entsprechenden Spannung u₂ᵤ einem zweiten Komparator 38 zugeführt. Der Komparator 38 steuert einen bistabilen Schalter 39 an, der seinerseits die Relais 21 und 22 steuert. Der Komparator 38 und der bistabile Schalter 39 sind so angeordnet, daß die Relais 21 und 22 erregt sind, solange die Korrekturspannung u₂ₖ größer als der untere Schwellenwert u₂ᵤ ist. Führt bei einem kritischen Fehler, z. B. bei einem Kurzschluß zwischen der Versorgungsspannung und einer Verbindungsleitung, die oben beschriebene Verringerung des Sollwertsignals nicht zu einem Absinken des Stroms i_{A} unter den maximal zulässigen Wert, verringert sich die Korrekturspannung u₂ₖ weiter, bis sie den unteren Schwellenwert u₂ᵤ unterschreitet. Die Zeit in der die Korrekturspannung u₂ₖ von dem Wert u₂ₖₒ bis auf den Wert u₂ᵤ abgesunken ist, ist durch die Differenz dieser Spannungswerte und die Zeitkonstante des Integrationsglieds bestimmt. Unterschreitet die Korrekturspannung u₂ₖ den unteren Schwellenwert u₂ᵤ, schaltet der Komparator 28 den bistabilen Schalter 39 in die andere Stellung um und der bistabile Schalter 39 unterbricht die Spannungszufuhr zu den Relais 21 und 22. Die Relais 21 und 22 fallen ab und die Kontakte K₁₁ und K₂₁ unterbrechen die zu der Magnetspule 17 führenden Verbindungsleitungen 15 und 16. Der bistabile Schalter 39 behält seine Stellung bei, bis er nach einem Beheben der Störung durch ein gesondertes Reset-Signal in seine ursprüngliche Stellung zurückgeschaltet worden ist. Der Komparator 38 und der bistabile Schalter 39 können auch als Komparator 40 mit Selbsthaltung realisiert werden. Die Relais 21 und 22 bewirken eine 2-polige Trennung der Magnetspule 17 von der Endstufe 12 der Verstärkerschaltung 10. Falls einer der Kontakte K₁₁ oder K₂₁ klebt, erfolgt zumindest eine einpolige Trennung der Magnetspule 17 von der Endstufe 12. Wesentlich ist, daß der Stromfluß zu der Magnetspule 17 auch in einem solchen Fall unterbrochen ist und sich die Oberflächentemperatur der Magnetspule 17 nicht weiter erhöht.

Die Figur 3 zeigt eine zweite erfindungsgemäß ausgebildete Schaltungsanordnung für die Ansteuerung eines Fluidik-Ventils. Dieses Ausführungsbeispiel zeigt eine zwei Magnetspulen 17 und 44 ansteuernde Verstärkerschaltung 10* in Verbindung mit einer Überwachungsschaltung 19*. Da die Figur 3 auf der Figur 2 aufbaut, sind im Folgenden nur die Teile beschrieben, die zusätzlich in der Figur 3 enthalten sind oder die von der Figur 2 abweichen. Die Magnetspule 17 ist über die Verbindungsleitungen 15 und 16 an einen ersten Ausgang der Endstufe 12* der Verstärkerschaltung 10* angeschlossen. Die zweite Magnetspule 44 ist über Verbindungsleitungen 45 und 46 an einen zweiten Ausgang der Endstufe 12* der Verstärkerschaltung 10* angeschlossen. Die Verstärkerschaltung 10* ist so ausgebildet, daß ihre Endstufe 12* der Magnetspule 17 den Strom i_{A} zuführt, wenn die Sollwertspannung u₁ positiv ist, und der Magnetspule 44 ist einen Strom i_{B} zuführt, wenn die Sollwertspannung u₁ negativ ist. Eine derartige Verstärkerschaltung 10* erlaubt es, den Steuerschieber eines Fluidik-Ventils aus einer Mittellage heraus in eine von zwei entgegengesetzten Richtungen auszulenken. Die anhand der. Figur 3 beschriebene Ausgestaltung der Überwachungsschaltung 19* macht davon Gebrauch, daß - in Abhängigkeit von dem Vorzeichen der Sollwertspannung u₁ - nur jeweils einer Magnetspule 17 oder 44 Strom zugeführt ist, während über die zu der jeweils anderen Magnetspule führenden Verbindungsleitungen kein Strom fließt. In der Verbindungsleitung 45 sind ein Meßwiderstand 48 und ein weiterer Kontakt K₁₂ des Relais 21 angeordnet. In der Verbindungsleitung 46 befindet sich ein weiterer Kontakt K₂₂ des Relais 22. Die Kontakte K₁₂ und K₂₂ sind wie die Kontakte K₁₁ und K₂₁ als Schließkontakte ausgebildet. Innerhalb der Überwachungsschaltung 19* ist parallel zu dem zweiten Ausgang der Endstufe 12* eine bipolare Z-Diode 50 und parallel zu der Magnetspule 44 eine weitere bipolare Z-Diode 51 angeordnet. Die an dem Meßwiderstand 48 abfallende Spannung ist einem Differenzverstärker 53 zugeführt. Der Differenzverstärker 53 formt die an dem Meßwiderstand 48 abfallende Spannung in eine auf das Bezugspotential bezogene Spannung u_{iB} um. Der Meßwiderstand 48 und der Differenzverstärker 53 bilden eine zweite Strommeßeinrichtung 54. Ein Rechenglied 55 summiert die Spannungen u_{iA} und u_{iB} zu einer Summenspannung u_{iS}. Da jeweils nur eine der Magnetspulen 17, 44 im normalen Betrieb bestromt ist, ist die Summenspannung u_{iS} entweder gleich der Spannung u_{iA} oder gleich der Spannung u_{iB}. Die weitere Verarbeitung der Spannung u_{iS} erfolgt daher wie für die Spannung u_{iA} anhand der Figur 2 beschrieben. Der Mittelwertbildner 30 bildet den zeitlichen Mittelwert u_{iSm} der Spannung u_{iS}. Diese Spannung entspricht in ausreichender Näherung dem für die Erwärmung der Magnetspule 17 bzw. 44 maßgebenden Strom. Weisen die Magnetspulen 17 und 44 in Sonderfällen nicht das gleiche Erwärmungsverhalten auf, kann z. B. durch an das jeweilige Erwärmungsverhalten angepaßte Meßwiderstände 20, 48 dafür gesorgt werden, daß die Spannungen u_{iA} und u_{iB} beim Erreichen des maximal zulässigen Stroms jeweils gleich groß sind. Der Betragsbildner.31 bildet den Betrag |u_{iSm}| der Spannung u_{iSm}. Auch in diesem Ausführungsbeispiel spielt es daher keine Rolle, in welcher Richtung die Ströme i_{A} und i_{B} fließen. Von der Überwachungsschaltung 19* werden somit nur die Beträge der Ströme i_{A} bzw. i_{B} ausgewertet. Die Reihenfolge des Mittelwertbildners 30 und des Betragsbildners 31 kann auch in diesem Ausführungsbeispiel vertauscht werden. Der Betrag |u_{iSm}| der Spannung u_{iSm} ist dem Verzögerungsglied 32 zugeführt, dessen Ausgangsspannung mit u_{iSv} bezeichnet ist. Die Spannung u_{iSv} und die Spannung u_{io,} die dem oberen Schwellenwert der Ströme i_{A} bzw. i_{B} entspricht, sind dem Komparator 33 zugeführt, dem das Integrationsglied 35 nachgeschaltet ist. Das mit dem Bezugszeichen 36* versehene Minimalwertauswahlglied verknüpft die Sollwertspannung u₁ derart mit der Korrekturspannung u₂ₖ, daß der betragsmäßig kleinere Wert unter Beibehaltung des Vorzeichens der Sollwertspannung u₁ der Eingangsstufe 11* der Verstärkerschaltung 10* als Eingangsspannung u₂ zugeführt ist. Die' Abschaltung der Relais 21 und 22 erfolgt in der gleichen Weise wie oben bereits anhand der Figur 2 beschrieben, wenn die Korrekturspannung u₂ₖ kleiner,als der untere Schwellenwert u₂ᵤ geworden ist.

Im Sinne der Erfindung ist auch möglich, der Eingangsstufe 11 bzw. 11* der Verstärkerschaltung 10 bzw. 10* anstelle des Minimalwertauswahlglieds 36 eine als Übertragungsglied mit gesteuertem Übertragungsfaktor α ausgebildete Anpassungsschaltung vorzuschalten. In diesem Fall verringert der Komparator 33 oder das dem Komparator 33 nachgeschaltete Integrationsglied 35 den Übertragungsfaktor α ausgehend von seinem Maximalwert so lange die Spannung uᵢᵥ (in Figur 2) bzw. die Spannung u_{iSv} (in Figur 3) größer als die Spannung uᵢₒ ist und erhöht den Übertragungsfaktor α wieder, wenn die Spannung uᵢᵥ bzw. u_{iSv} wieder kleiner als die Spannung uᵢₒ geworden ist.

## Patentansprüche

1. Elektrische Schaltungsanordnung für die Ansteuerung eines magnetbetätigten Fluidik-Ventils,
- mit einer eine Eingangsstufe (11) und eine Endstufe (12) aufweisenden Verstärkerschaltung (10), die eine der Eingangsstufe (11) zugeführte Spannung (u₂) in einen Strom entsprechender Größe (u₁) umformt, der von der Endstufe (12) über Verbindungsleitungen (15,16) zu einer Magnetspule (17) des Fluidik-Ventils fließt,
**dadurch gekennzeichnet,**
- **daß** eine Überwachungsschaltung (19) mit einer Strommeßeinrichtung (28) für den von der Endstufe (12) über die Verbindungsleitungen (15, 16) zu der Magnetspule (17) fließenden Strom (i_{A}) vorgesehen ist,
- **daß** der Überwachungsschaltung (19) eine die Größe des zu der Magnetspule.(17) fließenden Stroms (i_{A}) bestimmende Sollwertspannung (u₁) zugeführt ist,
- **daß** die Überwachungsschaltung (19), wenn der zeitliche Mittelwert (uᵢₘ) des Stroms (i_{A}) einen oberen Schwellenwert (uᵢₒ) überschritten hat, die der Eingangsstufe (11) zugeführte Spannung (u₂) ausgehend von der Sollwertspannung (u₁) stetig verringert, wobei die Überwachungsschaltung (19) eine zu der Magnetspule (17) führende Verbindungsleitung (15) unterbricht, wenn der zeitliche Mittelwert (uᵢₘ) des Stroms (i_{A}) nach einer vorgebbaren Zeit den oberen Schwellenwert (uᵢₒ) nicht wieder unterschritten hat, und
- **daß** die Überwachungsschaltung (19) die der Eingangsstufe (11) zugeführte Spannung (u₂) wieder bis auf die Sollwertspannung (u₁) erhöht, nachdem der zeitliche Mittelwert (uᵢₘ) des Stroms (i_{A}) den oberen Schwellenwert (uᵢₒ) unterschritten hat.

2. Elektrische Schaltungsanordnung nach Anspruch 1, **dadurch gekennzeichnet,**
- **daß** ein Komparator (33) den zeitlichen Mittelwert (uᵢₘ) des Ausgangssignals (u_{iA}) der Strommeßeinrichtung (28) mit einem oberen Schwellenwert (uᵢₒ) vergleicht,
- **daß** dem Komparator (33) ein Integrationsglied (35) nachgeschaltet ist, dessen Ausgangsspannung (u₂ₖ) derart begrenzbar ist, daß sie einen oberen Wert (u₂ₖₒ) nicht überschreitet,
- **daß** sich die Ausgangsspannung (u₂ₖ) des Integrationsglieds (35) verringert, solange der zeitliche Mittelwert (uᵢₘ) des Stroms (i_{A}) den oberen Schwellenwert (uᵢₒ) überschreitet, und daß sich die Ausgangsspannung (u₂ₖ) des Integrationsglieds (35) erhöht; solange der zeitliche Mittelwert (uᵢₘ) des Stroms (i_{A}) den oberen Schwellenwert (uᵢₒ) unterschreitet,
- **daß** die Ausgangsspannung (u₂ₖ) des Integrationsglieds (35) und die Sollwertspannung (u₁) einem Minimalwertauswahlglied (36) zugeführt sind und
- **daß** die kleinere (u₂) der beiden Spannungen der Eingangsstufe (11) der Verstärkerschaltung (10) zugeführt ist.

3. Schaltungsanordnung nach Anspruch 2, **dadurch gekennzeichnet, daß** der obere Wert (u₂ₖₒ), auf den die Ausgangsspannung (u₂ₖ) des Integrationsglieds (35) begrenzbar ist, mindestens gleich der maximalen Sollwertspannung (u_{1[100%]}) ist.

4. Schaltungsanordnung nach Anspruch 2 oder Anspruch.3, **dadurch gekennzeichnet, daß** der zeitliche Mittelwert (uᵢₘ) des Stroms (i_{A}) dem Komparator (33) über ein Verzögerungsglied (32) zugeführt ist.

5. Schaltungsanordnung nach einem der Ansprüche 2 bis 4, **dadurch gekennzeichnet, daß** zwischen die Strommeßeinrichtung (28) und den Komparator (33) ein Betragsbildner (31) geschaltet ist.

6. Schaltungsanordnung nach einem der Ansprüche 2 bis 5, **dadurch gekennzeichnet,**
- **daß** den Eingängen eines zweiten Komparators (38) die Ausgangsspannung (u₂ₖ) des Integrationsglieds (35) und eine einem unteren Schwellenwert (u₂ᵤ) entsprechende Spannung zugeführt sind und
- **daß** der zweite Komparator (38) ein Relais (21) mit einem Schaltkontakt (K₁₁) steuert, wobei der Schaltkontakt (K₁₁) eine Verbindungsleitung (15) unterbricht, wenn die Ausgangsspannung (u₂ₖ) des Integrationsglieds (35) kleiner als der untere Schwellenwert (u₂ᵤ) geworden ist.

7. Schaltungsanordnung nach Anspruch 6, **dadurch gekennzeichnet, daß** der zweite Komparator (38) ein zweites Relais (22) mit einem Schaltkontakt (K₂₁) steuert, wobei der Schaltkontakt (K₂₁) die andere Verbindungsleitung (16) unterbricht, wenn die Ausgangsspannung (u₂ₖ) des Integrationsglieds (35) kleiner als der untere Schwellenwert (u₂ᵤ) geworden ist.

8. Schaltungsanordnung nach Anspruch 6 oder Anspruch 7, **dadurch gekennzeichnet,**
- **daß** zwischen dem zweiten Komparator (38) und dem bzw. den Relais (21, 22) ein bistabiler Schalter (39) angeordnet ist,
- **daß** der zweite Komparator (38) den bistabilen Schalter (39) von einer ersten Stellung in die zweite Stellung schaltet, wenn die Ausgangsspannung (u₂ₖ) des Integrationsglieds (35) kleiner als der untere Schwellenwert (u₂ᵤ) geworden ist, und
- **daß** die Rückstellung des bistabilen Schalters (39) in die erste Stellung durch ein gesondertes Reset-Signal erfolgt.

9. Schaltungsanordnung nach Anspruch 8, **dadurch gekennzeichnet, daß** der zweite Komparator (38) und der bistabile Schalter (39) als Komparator (40) mit Selbsthaltung ausgebildet sind.

10. Schaltungsanordnung nach einem der Ansprüche 2 bis 9, **dadurch gekennzeichnet,**
- **daß** bei einer zwei Magnetspulen (17, 44) ansteuernden Verstärkerschaltung (10*), die die eine Magnetspule (17) bei positiver Sollwertspannung (+u₁) und die andere Magnetspule (44) bei negativer Sollwertspannung (-u₁) ansteuert, das Minimalwertauswahlglied (36*) unter Beibehaltung des Vorzeichens der Sollwertspannung (u₁) den betragsmäßig kleineren Wert auswählt und der Verstärkerschaltung (10*) als Eingangsspannung (u₂) zuführt,
- **daß** ein Rechenglied (55) die Summe (u_{iS}) der den über die Magnetleitungen (15 und 16 bzw. 45 und 46) fließenden Strömen (i_{A}, i_{B}) entsprechenden Spannungen (u_{iA}, u_{iB}) bildet und
- **daß** das Summensignal (u_{iS}) dem ersten Komparator (33) zugeführt ist.

11. Schaltungsanordnung nach Anspruch 10 mit zwei von dem zweiten Komparator (38) angesteuerten Relais (21, 22), **dadurch gekennzeichnet, daß** jedes Relais (21, 22) jeweils eine der zu den Magnetspulen (17, 44) führenden Verbindungs - leitungen (15, 16, 45, 46) unterbricht, wenn die Ausgangsspannung (u₂ₖ) des Integrationsglieds (35) kleiner als der untere Schwellenwert (u₂ᵤ) geworden ist.

## Claims

1. An electric circuit arrangement for controlling a solenoid-operated fluid valve,
- having an amplifier circuit (10) with an input stage (11) and an output stage (12), which converts a voltage (u₂) supplied to the input stage (11) into a current of a corresponding magnitude, which flows from the output stage (12) via connecting lines (15, 16) to a solenoid coil (17) of the fluid valve,
**characterized by the fact that**
- a monitoring circuit (19) having a current-measuring device (28) for the current (i_{A}) flowing from the output stage (12) via the connecting lines (15, 16) to the solenoid coil (17) is provided,
- the monitoring circuit (19) is supplied with a setpoint voltage (u₁) determining the magnitude of the current (i_{A}) flowing to the solenoid coil (17),
- the monitoring circuit (19) continuously reduces the voltage (u₂) supplied to the input stage (11) starting from the setpoint voltage (u₁) if the time average (uᵢₘ) of the current (i_{A}) has exceeded an upper threshold value (uᵢₒ), the monitoring circuit (19) interrupting a connecting line (15) leading to the solenoid coil (17) if the time average (uᵢₘ) of the current (i_{A}) has not fallen again below the upper threshold value (uᵢₒ) after a specifiable time, and
- the monitoring circuit (19) increases the voltage (u₂) supplied to the input stage (11) again to the setpoint voltage (u₁) after the time average (uᵢₘ) of the current (i_{A}) has fallen below the upper threshold value (uᵢₒ).

2. An electric circuit arrangement according to claim 1, **characterized by** the fact that
- a comparator (33) compares the time average (uᵢₘ) of the output signal (u_{iA}) of the current-measuring device (28) to an upper threshold value (uᵢₒ),
- the comparator (33) has an integration element (35) connected to it in outgoing circuit, the output voltage (u₂ₖ) of which is limitable in such a way that it does not exceed an upper value (u₂ₖₒ),
- the output voltage (u₂ₖ) of the integration element (35) decreases for as long as the time average (uᵢₘ) of the current (i_{A}) exceeds the upper threshold value (uᵢₒ), and the output voltage (u₂ₖ) of the integration element (35) increases for as long as the time average (uᵢₘ) of the current (i_{A}) is less than the upper threshold value (uᵢₒ),
- the output voltage (u₂ₖ) of the integration element (35) and the setpoint voltage (u₁) are supplied to a minimum value selection element (36) and
- the smaller (u₂) of the two voltages of the input stage (11) is supplied to the amplifier circuit (10).

3. A circuit arrangement according to claim 2, **characterized by** the fact that the upper value (u₂ₖₒ) is limitable to the output voltage (u2k) of the integration element (35), at least equal to the maximum setpoint voltage (u_{1[100%]}).

4. A circuit arrangement according to Claim 2 or Claim 3, **characterized by** the **fact that** the time average (uᵢₘ) of the current (i_{A}) is supplied to the comparator (33) via a time-delay element (32).

5. A circuit arrangement according to any of claims 2 to 4, **characterized by** the fact that an absolute-value generator (31) is connected between the current-measuring device (28) and the comparator (33).

6. A circuit arrangement according to any of Claims 2 to 5, **characterized by** the fact that
- the output voltage (u₂ₖ) of the integration element (35) and a voltage corresponding to a lower threshold value (u₂ᵤ) are supplied to the inputs of a second comparator (38) and
- the second comparator (38) controls a relay (21) having a switching contact (K₁₁), the switching contact (K₁₁) interrupting a connecting line (15) if the output voltage (u₂ₖ) of the integration element (35) has become smaller than the lower threshold value (u₂ᵤ).

7. A circuit arrangement according to Claim 6, **characterized by** the fact **that** the second comparator (38) controls a second relay (22) having a switching contact (K₂₁), the switching contact (K₂₁) interrupting the other connecting line (16) if the output voltage (u₂ₖ) of the integration element (35) has become smaller than the lower threshold value (u₂ᵤ).

8. A circuit arrangement according to Claim 6 or Claim 7, **characterized by** the fact that
- a bistable switch (39) is situated between the second comparator (38) and the relay(s) (21, 22).
- the second comparator (38) switches the bistable switch (39) from a first position into a second position if the output voltage (u₂ₖ) of the integration element (35) has become smaller than the lower threshold value (u₂ᵤ), and
- the resetting of the bistable switch (39) into the first position is done by a separate reset signal.

9. A circuit arrangement according to Claim 8, **characterized by** the fact that the second comparator (38) and the bistable switch (39) are configured as a comparator (40) having a self holding mechanism.

10. A circuit arrangement according to any of Claims 2 to 9, **characterized by the fact that**
- in an amplifier circuit (10*) controlling two solenoid coils (17, 44), which controls the one solenoid coil (17) in the case of a positive setpoint voltage (+u₁) and the other solenoid coil (44) in the case of a negative setpoint voltage (-u₁), the minimum value selection element (36*) while preserving the sign of the setpoint voltage (u₁) selects the smaller value in terms of absolute value and supplies it to the amplifier circuit (10*) as an input voltage (u₂),
- a computing element (55) forms the sum (u_{iS}) of the voltages (u_{1A}, u_{1B}) corresponding to the currents (i_{A}, i_{B}) flowing via the solenoid lines (15 and 16 or 45 and 46) and
- the sum signal (u_{iS}) is supplied to the first comparator (33).

11. A circuit arrangement according to Claim 10 having two relays (21, 22) controlled by the second comparator (38), **characterized by** the fact that each relay (21, 22) in each instance interrupts one of the connecting lines (15, 16, 45, 46) leading to the solenoid coils (17, 44) if the output voltage (u₂ₖ) of the integration element (35) has become smaller than the lower threshold value (u₂ᵤ).

## Revendications

1. Branchement électrique pour la commande d'une valve fluidique à actionnement magnétique,
- doté d'un branchement (10) amplificateur présentant un étage (11) d'entrée et un étage (12) de sortie, qui transforme une tension (u₂) ramenée vers l'étage (11) d'entrée en un courant (i_{A}) d'amplitude correspondante, allant de l'étage (12) de sortie vers une bobine (17) d'excitation de la valve fluidique, en passant par des câbles (15, 16) de connexion,
**caractérisé en ce**
- **que** soit prévu un branchement (19) de surveillance doté d'un dispositif (28) de mesure du courant pour le courant (i_{A}), qui passe de l'étage (12) de sortie vers la bobine (17) d'excitation, par les câbles (15, 16) de connexion,
- **qu'**une tension (u₁) de consigne, qui détermine l'amplitude du courant (i_{A}) allant vers la bobine (17) d'excitation, est ramenée vers le branchement (19) de surveillance,
- **que**, lorsque la valeur moyenne (uᵢₘ) dans le temps du courant (i_{A}) a dépassé une valeur (uᵢₒ) limite supérieure, le branchement (19) de surveillance réduit de façon continue, en partant de la tension (u₁) de consigne, la tension (u₂) ramenée vers l'étage (11) d'entrée, cependant que le branchement (19) de surveillance coupe une connexion (15) menant vers la bobine (17) d'excitation si, après un temps donné paramétrable, la valeur moyenne (uᵢₘ) dans le temps du courant (i_{A}) n'est pas redescendue sous la valeur (uᵢₒ) limite supérieure, et
- **que** le branchement (19) de surveillance fait croître la tension (u₂) ramenée vers l'étage (11) d'entrée pour la ramender au niveau de la tension (u₁) de consigne, après que la valeur moyenne (uᵢₘ) dans le temps du courant (i_{A}) soit redescendue sous la valeur (uᵢₒ) limite supérieure.

2. Branchement électrique selon la revendication n° 1, **caractérisé en ce**
- **qu'**un comparateur (33) compare la valeur moyenne (uᵢₘ) dans le temps du signal (u_{iA}) de sortie du dispositif (28) de mesure du courant avec une valeur (uᵢₒ) limite supérieure,
- **qu'**en aval du comparateur (33) est branché un élément (35) intégrateur, dont la tension (u₂ₖ) de sortie peut être limitée de façon à ne pas dépasser une valeur (u₂ₖₒ) supérieure,
- **que** la tension (u₂ₖ) de sortie de l'élément (35) intégrateur décroît, tant que la valeur moyenne (uᵢₘ) dans le temps du courant (i_{A}) est supérieure à la valeur (uᵢₒ) limite supérieure, et que la tension (u₂ₖ) de sortie de l'élément (35) intégrateur croît, tant que la valeur moyenne (uᵢₘ) dans le temps du courant (i_{A}) est inférieure à la valeur (uᵢₒ) limite supérieure,
- **que** la tension (u₂ₖ) de sortie de l'élément (35) intégrateur et la tension (u₁) de consigne sont ramenées vers un élément (36) de sélection de la valeur la plus basse et
- **que** la plus basse (u₂) des deux tensions est ramenée vers l'étage (11) d'entrée du branchement (10) amplificateur.

3. Branchement selon la revendication n° 2, **caractérisé en ce que** la valeur (u₂ₖₒ) supérieure, à laquelle la tension (u₂ₖ) de sortie de l'élément (35) intégrateur peut être limitée, est au moins égale à la tension (u_{1[100%]}) de consigne maximale.

4. Branchement selon la revendication n° 2 ou la revendication n° 3, **caractérisé en ce que** la valeur moyenne (uᵢₘ) dans le temps du courant (i_{A}) est ramenée vers le comparateur (33) en passant par un élément (32) de retard.

5. Branchement selon une des revendications n° 2 à n° 4, **caractérisé en ce qu'**entre le dispositif (28) de mesure du courant et le comparateur (33) est disposé un générateur (31) de valeur absolue.

6. Branchement selon une des revendications n° 2 à n° 5, **caractérisé en ce**
- **que** la tension (u₂ₖ) de sortie de l'élément (35) intégrateur et une tension correspondant à une valeur (u₂ᵤ) limite inférieure sont ramenées vers les entrées d'un second comparateur (38) et
- **que** le second comparateur (38) commande un relais (21) doté d'un commutateur (K₁₁), cependant que le commutateur (K₁₁) coupe une connexion (15), lorsque la tension (u₂ₖ) de sortie de l'élément (35) intégrateur est devenue inférieure à la valeur (u₂ᵤ) limite inférieure.

7. Branchement selon la revendication n° 6, **caractérisé en ce que** le second comparateur (38) commande un second relais (22) doté d'un commutateur (K₂₁), cependant que le commutateur (K₂₁) coupe l'autre connexion (16), lorsque la tension (u₂ₖ) de sortie de l'élément (35) intégrateur est devenue inférieure à la valeur (u₂ᵤ) limite inférieure.

8. Branchement selon la revendication n° 6 ou la revendication n° 7, **caractérisé en ce**
- **qu'**entre le second comparateur (38) et le ou les relais (21, 22), selon le cas, est disposé un interrupteur (39) bistable,
- **que** le second comparateur (38) fait basculer l'interrupteur (39) bistable d'une première position dans la seconde position, lorsque la tension (u₂ₖ) de sortie de l'élément (35) intégrateur est devenue inférieure à la valeur (u₂ᵤ) limite inférieure, et
- **que** le retour de l'interrupteur (39) bistable dans la première position est provoqué à l'aide d'un signal de reset spécifique.

9. Branchement selon la revendication n° 8, **caractérisé en ce que** le second comparateur (38) et l'interrupteur (39) bistable sont conçus sous forme de comparateur (40) à auto-maintien.

10. Branchement selon une des revendications n°2 à n° 9, **caractérisé en ce**
- **que** pour un branchement (10*) amplificateur commandant deux bobines (17, 44) d'excitation, qui commandent l'une des bobines (17) d'excitation en cas de tension (+u₁) de consigne positive et l'autre bobine (44) d'excitation en cas de tension (-u₁) de consigne négative, l'élément (36*) de sélection choisisse la valeur de valeur absolue plus faible et la ramène vers le branchement (10*) amplificateur en tant que tension (u₂) d'entrée, tout en gardant le signe de la tension (u₁) de consigne,
- **qu'**un élément (55) de calcul constitue la somme (uᵢₛ) des tensions (u_{iA}, u_{iB}), qui correspondent aux courants (i_{A}, i_{B}) passant par les connexions (15 et 16 ou 45 et 46, selon le cas) des bobines, et
- **que** le signal de la somme (uᵢₛ) est ramené vers le premier comparateur (33).

11. Branchement selon la revendication n° 10, doté de deux relais (21, 22) commandés par le second comparateur (38), **caractérisé en ce que** chacun des relais (21, 22) coupe une des connexions (15, 16, 45, 46) menant vers les bobines (17, 44) d'excitation, lorsque la tension (u₂ₖ) de sortie de l'élément (35) intégrateur est devenue inférieure à la valeur (u₂ᵤ) limite inférieure.
